# EUROPÄISCHE PATENTANMELDUNG

(11) **EP 2 518 916 A1**
(43) Veröffentlichungstag der Anmeldung: **31.10.2012**
(21) Anmeldenummer: 11164294.8
(22) Anmeldetag: 29.04.2011
(51) Int. Cl.: H04B 10/155, H04B 10/20

(54) **Verfahren zur optischen Übertragung von Nutzdaten**

(71) Anmelder: Siemens Aktiengesellschaft, 80333 München (DE)
(72) Erfinder: Wagner, Michael, 76764 Rheinzabern (DE)

(57) **Zusammenfassung**

Die Erfindung betrifft ein Verfahren zur optischen Übertragung von Nutzdaten durch einen Transceiver (100) an einen Empfänger (102), wobei das Verfahren die Schritte umfasst:
- Optisches Senden (200) von ersten Datensignalen an den Empfänger (102) mit einer Sendeleistung,
- Empfang (208) von zweiten Datensignalen von dem Empfänger (102) als Antwort auf die ersten Datensignale, wobei die zweiten Datensignale eine Empfangsqualitätsinformation umfassen, wobei die Empfangsqualitätsinformation ein Maß für die Qualität umfasst, mit welcher die ersten Datensignale durch den Empfänger (102) empfangen werden,
- Regelung (212; 216) der Sendeleistung in Abhängigkeit von der Empfangsqualitätsinformation, wobei die Regelung so durchgeführt wird, dass die ersten Datensignale mit zumindest einer vorbestimmten Qualität durch den Empfänger (102) empfangen werden können,
- Übertragung (218) der Nutzdaten mit der geregelten Sendeleistung an den Empfänger (102).

## Beschreibung

Die Erfindung betrifft ein Verfahren zur optischen Übertragung von Nutzdaten durch einen Transceiver an einen Empfänger, eine Vorrichtung zur optischen Übertragung von Nutzdaten an einen Empfänger sowie ein Computerprogrammprodukt.

Optische Transceiver werden z.B. im Bereich Ethernet zur Überbrückung von größeren Distanzen eingesetzt oder an Stellen, an denen über die Verbindung kein Potenzialausgleich stattfinden darf. Üblicherweise werden hierbei die optischen Transceiver mit einer vorgegebenen Sendeleistung angeboten, um eine bestimmte maximale Entfernung optisch zu überbrücken. Die tatsächlichen Anwendungen von optischen Transceivern liegen jedoch meist nicht im Bereich von Datenübertragungen über Entfernungen, welche tatsächlich an der Grenze der maximal möglichen Übertragungsdistanz eines solchen optischen Transceivers liegen. Daraus folgt, dass bei tatsächlichen realen Anwendungen somit ein Teil bzw. ein großer Teil der eingespeisten optischen Energie zur Datenübertragung überhaupt nicht benötigt wird, da diese zur Sicherstellung der Verbindungsqualität gar nicht notwendig ist. In anderen Worten würde bei geringeren Übertragungsdistanzen auch die Verwendung einer geringeren optischen Sendeleistung ausreichen, um die zu übertragenden Daten mit einer ausreichend hohen Verbindungsqualität zur Verfügung zu stellen.

Demgegenüber liegt der Erfindung die Aufgabe zugrunde, ein verbessertes Verfahren zur optischen Übertragung von Nutzdaten durch einen Transceiver an einen Empfänger, eine verbesserte Vorrichtung zur optischen Übertragung von Nutzdaten sowie ein verbessertes Computerprogrammprodukt zu schaffen.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Es wird ein Verfahren zur optischen Übertragung von Nutzdaten durch einen Transceiver an einen Empfänger geschaffen, wobei das Verfahren die Schritte umfasst:
- optisches Senden von ersten Datensignalen an den Empfänger mit einer Sendeleistung,
- Empfang von zweiten Datensignalen von dem Empfänger als Antwort auf die ersten Datensignale, wobei die zweiten Datensignale eine Empfangs-Qualitätsinformation umfassen, wobei Empfangs-Qualitätsinformation ein Maß für die Qualität umfasst, mit welcher die ersten Datensignale durch den Empfänger empfangen werden,
- Regeln der Sendeleistung in Abhängigkeit von der Empfangs-Qualitätsinformation, wobei das Regeln so durchgeführt wird, dass die ersten Datensignale mit zumindest einer vorbestimmten Qualität durch den Empfänger empfangen werden können,
- Übertragung der Nutzdaten mit der geregelten Sendeleistung an den Empfänger.

Mit anderen Worten wird also durch den Sender festgestellt, mit welcher Qualität die gesendeten Daten beim Empfänger ankommen. Ist die Qualität der Daten zu hoch, deutet dies darauf hin, dass insbesondere aufgrund eines kürzeren optischen Übertragungswegs die hierfür momentan verwendete Sendeleistung zu hoch ist. Dies ermöglicht also, unter Berücksichtigung der Informationen der Empfangsqualität eine verminderte Sendeleistung festzulegen, mit welcher anschließend Nutzdaten an den Empfänger übertragen werden können. Die so festgelegte Reduzierung der Sendeleistung entspricht also einer vorbestimmten Mindestqualität, mit welcher die entsprechenden Signale beim Empfänger empfangen werden können.

Dieses Verfahren funktioniert selbstverständlich auch im umgekehrten Fall, nämlich wenn festgestellt wird, dass die Qualität der beim Empfänger empfangenen Datensignale zu niedrig ist, womit die Sendeleistung in entsprechender Weise so weit erhöht wird, dass theoretisch die ersten Datensignale mit zumindest der vorbestimmten Qualität durch den Empfänger empfangen werden könnten.

Aus der Regelung der Sendeleistung in Abhängigkeit von der Empfangs-Qualitätsinformation resultieren verschiedene Vorteile: Zum einen wird, anstatt mit einer maximalen Sendeleistung Daten zu übertragen, die verwendete Sendeleistung auf einen für den optischen Übertragungsweg optimierten Wert angepasst, wodurch die zur Datenübertragung benötigte Energie vermindert wird. Durch die daraus resultierende Reduzierung der Leistung können entsprechende Anforderungen an Netzteile ebenfalls reduziert werden, was insgesamt die Kosten entsprechender Datenübertragungsvorrichtungen reduziert. Außerdem sorgt die Reduzierung der Sendeleistung für eine Reduzierung der bei der Datenübertragung entstehenden Wärmeentwicklung, wodurch sich insbesondere auch die Lebensdauer der verwendeten Komponenten erhöht.

Nach einer Ausführungsform der Erfindung umfasst die Empfangs-Qualitätsinformation eine Empfangsleistung, mit welcher die ersten Datensignale durch den Empfänger empfangen werden. Dies hat den Vorteil einer einfachen Implementierung des Verfahrens, da optische Transceiver bereits für den Fall, dass diese mit Lasern aufgebaut sind, die Möglichkeit aufweisen, alle Leistungsparameter sowie die Temperatur des Transceivers über ein Diagnostikinterface (üblicherweise IIC) auszulesen. Somit kann in einfacher Weise die Empfangsleistung beim Empfänger ermittelt werden und daraufhin an den Sender der ersten Datensignale zurückübermittelt werden.

Nach einer Ausführungsform der Erfindung umfassen die Empfangs-Qualitätsinformationen ein Signal-Rausch-Verhältnis, mit welchem die ersten Datensignale durch den Empfänger empfangen werden. Dies hat den Vorteil, dass in besonderer Weise den realen Gegebenheiten bezüglich der verwendeten Leitungsqualität bei der Übertragung der ersten Datensignale Rechnung getragen wird.

Nach Ausführungsformen der Erfindung werden die ersten Datensignale über einen optischen Übertragungsweg an den Empfänger gesendet, wobei die zweiten Datensignale über denselben optischen Übertragungsweg empfangen werden. In anderen Worten findet eine Kommunikation der zweiten Datensignale an den Sender der ersten Datensignale nicht über eine externe bzw. zusätzliche physikalische Kommunikationsverbindung statt, sondern die zweiten Datensignale werden optisch über dasselbe optische Kabel an den Sender der ersten Datensignale zurückübertragen. Damit ergibt sich insgesamt eine kosteneffiziente Realisierungsmöglichkeit des Verfahrens.

Es sei an dieser Stelle angemerkt, dass es in einer besonders bevorzugten Ausführungsform der Erfindung möglich ist, dass sich Sender und Empfänger bezüglich der zur Datenübertragung notwendigen Sendeleistung gegenseitig überwachen, d.h. das obig beschriebene Verfahren gegenseitig durchführen. Hierbei ist es beispielsweise möglich, dass der Empfänger das obig beschriebene Verfahren bereits mit den zweiten Datensignalen durchführt. Anders ausgedrückt läuft ein entsprechendes Verfahren zwischen einem ersten und einem zweiten Transceiver z.B. wie folgt ab:
Zunächst sendet der erste Transceiver ein Datensignal an den zweiten Transceiver. Dies erfolgt mit einer bestimmten Sendeleistung. Als Antwort darauf analysiert der zweite Transceiver die Empfangsqualität dieser Datensignale und sendet eine entsprechende Empfangs-Qualitätsinformation an den ersten Transceiver zurück. Auch dieses Zurücksenden der Empfangs-Qualitätsinformation erfolgt mit einer vorbestimmten Sendeleistung.

Die Empfangs-Qualitätsinformation hat nun zwei Bestimmungen: Zunächst dient sie zur Regelung der Sendeleistung am ersten Transceiver, wie dies bereits detailliert oben beschrieben wurde. Zum anderen kann das Datensignal, welches die Empfangs-Qualitätsinformation enthält, auch vom ersten Transceiver dahingehend analysiert werden, dass durch den ersten Transceiver seinerseits die Empfangsqualität dieses Datensignals festgestellt wird, mit welchem dieses Datensignal vom zweiten Transceiver empfangen wurde. Im Gegenzug erzeugt der erste Transceiver wiederum seinerseits eine entsprechende Empfangs-Qualitätsinformation bezüglich dieses Datensignals und sendet diese Empfangs-Qualitätsinformation einem zweiten Transceiver zurück. Diese daraufhin durch den zweiten Transceiver empfangene Empfangs-Qualitätsinformation kann nun beim zweiten Transceiver zur Regelung von dessen Sendeleistung verwendet werden.

Nach einer Ausführungsform der Erfindung umfassen die Nutzdaten einen ersten und einen zweiten Teil, wobei es sich bei den ersten Datensignalen um den ersten Teil der Nutzdaten selbst handelt, wobei es sich bei den mit der geregelten Sendeleistung an den Empfänger übertragenen Daten um den zweiten Teil der Nutzdaten handelt. In anderen Worten wird also zur Regelung der Sendeleistung nicht ein "spezielles" erstes Datensignal an den Empfänger gesendet, sondern das erste Datensignal ist ein Teil der Nutzdaten, welche ohnehin an den Empfänger übermittelt werden müssen. Damit entfällt die für die Kalibrierung der Sendeleistung notwendige Übermittlung von speziellen ersten Datensignalen an den Empfänger. Stattdessen werden die eigentlichen Nutzdaten bereits über diesen Kalibrierungsvorgang (Regelungsvorgang) verwendet. Dies reduziert insgesamt das für den Regelungsvorgang notwendige Datenaufkommen. Außerdem ermöglicht dies, im Rahmen einer laufenden Nutzdatenübertragung immer wieder, zum Beispiel in vorbestimmten Zeitintervallen, das obig beschriebene Regelungsverfahren durchzuführen. Somit wird kontinuierlich eine optimale Datenübertragungsqualität bei maximaler Energieeffizienz gewährleistet.

Nach einer weiteren Ausführungsform der Erfindung erfolgt die Regelung der Sendeleistung zusätzlich in Abhängigkeit von der Temperatur des Transceivers und/oder von der Spannung des Transceivers. Dies hat den Vorteil, dass die Einstellung der Sendeleistung mit einer gewissen Reserve erfolgt, die mögliche Temperaturveränderungen und/oder Spannungsveränderungen auf der Sende- bzw. Empfangsseite berücksichtigt. Denn möglicherweise ist es so, dass eine höhere Temperatur des Transceivers zu einer verminderten Sendeleistung führt. Wird nun die Regelung so durchgeführt, dass bei einer Abweichung von dieser bestimmten Temperatur und/oder dieser gemessenen Spannung um einen maximal vorbestimmten Wert die ersten Datensignale mit zumindest der vorbestimmten Qualität durch den Empfänger empfangen werden können, wird verhindert, dass bei geringfügigen Temperatur- oder Spannungsschwankungen die Qualität der empfangenen Nutzdatensignale auf einen unbrauchbaren Wert reduziert wird.

Nach Ausführungsformen der Erfindung ist dabei möglich, dass es sich bei der obig genannten Temperatur um eine aktuell gemessene Betriebstemperatur des Transceivers oder eine über einen Zeitraum ermittelte Betriebstemperatur des Transceivers handelt. Im Falle der Verwendung der Regelung zusätzlich in Abhängigkeit von der Spannung des Transceivers ist es analog möglich, dass es sich bei der Spannung um eine aktuell gemessene Betriebsspannung des Transceivers oder um eine über einen Zeitraum ermittelte Betriebsspannung des Transceivers handelt.

In einem weiteren Aspekt betrifft die Erfindung eine Vorrichtung zur optischen Übertragung von Nutzdaten an einen Empfänger, wobei die Vorrichtung umfasst:
- einen Transceiver zum optischen Senden von ersten Datensignalen an den Empfänger mit einer Sendeleistung, wobei der Transceiver ferner ausgebildet ist zum Empfang von zweiten Datensignalen von dem Empfänger als Antwort auf die ersten Datensignale, wobei die zweiten Datensignale eine Empfangs-Qualitätsinformation umfassen, wobei die Empfangs-Qualitätsinformation ein Maß für die Qualität umfasst, mit welcher die ersten Datensignale durch den Empfänger empfangen werden,
- Mittel zur Regelung der Sendeleistung in Abhängigkeit von der Empfangs-Qualitätsinformation, wobei die Vorrichtung ausgebildet ist, die Regelung so durchzuführen, dass die ersten Datensignale mit zumindest einer vorbestimmten Qualität durch den Empfänger empfangen werden können, wobei der Transceiver dazu ausgebildet ist, die Nutzdaten mit der geregelten Sendeleistung an den Empfänger zu übertragen.

In einem weiteren Aspekt betrifft die Erfindung ein Computerprogrammprodukt mit von einem Prozessor ausführbaren Instruktionen zur Durchführung des obig beschriebenen Verfahrens.

Im Folgenden werden bevorzugte Ausführungsformen der Erfindung anhand der folgenden Zeichnungen näher erläutert.

Es zeigen:
- Figur 1: zwei Transceiver, welche unter Verwendung optischer Datenübertragung miteinander kommunizieren,
- Figur 2: ein Flussdiagramm eines Verfahrens zur optischen Übertragung von Nutzdaten durch einen Transceiver an einen Empfänger.

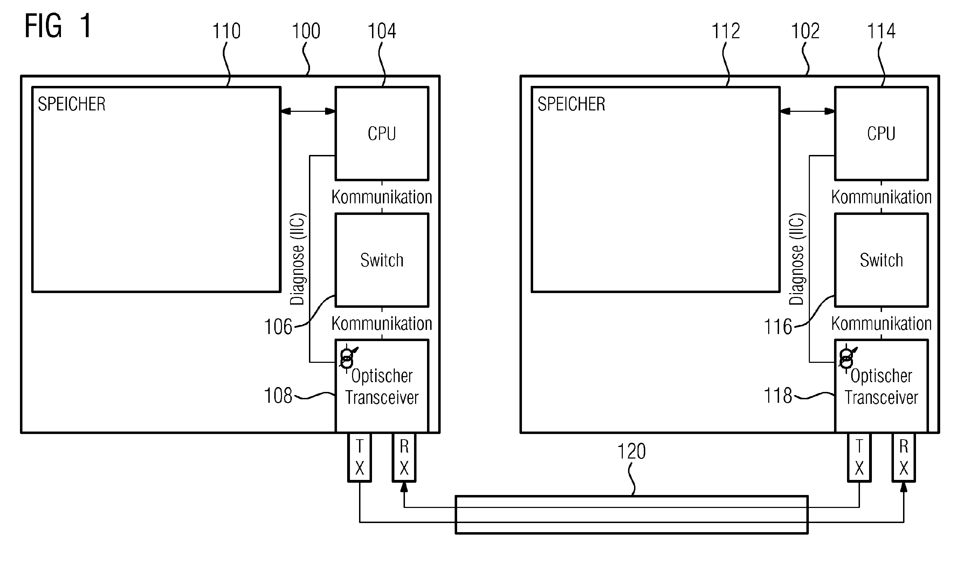

Die Figur 1 zeigt ein Blockdiagramm zweier Vorrichtungen 100 und 102, welche unter Verwendung jeweiliger optischer Transceiver 108 bzw. 118 über einen optischen Übertragungsweg 120, zum Beispiel ein Glasfaserkabel, miteinander kommunizieren. Beispielsweise handelt es sich bei den Vorrichtungen 100 und 102 um Ethernetswitches.

Die optischen Transceiver 108 und 118 weisen dabei jeweils entsprechende optische Sender und Empfänger (TX, RX) auf, welche zum Senden bzw. Empfangen von optischen Signalen über den optischen Übertragungsweg 120 ausgebildet sind. Bei diesen Transceivern 108 und 118 können beispielsweise Laser zur optischen Datenübertragung zum Einsatz kommen.

Die Vorrichtungen 100 und 102 weisen jeweils entsprechende Speicher 110 bzw. 112, entsprechende Prozessoren 104 bzw. 114 sowie weitere Hardwarekomponenten 106 und 116 auf, wobei diese Hardwarekomponenten 106 bzw. 116 der Realisierung der Switchfunktion der Vorrichtung 100 bzw. 102 dienen.

Eine Nutzdatenübertragung von Vorrichtung 100 zu Vorrichtung 102 erfolgt dabei unter Verwendung der optischen Transceiver 108 bzw. 118, wobei die Datenübertragung durch die jeweiligen CPUs 104 bzw. 114 und die jeweiligen Switches 106 bzw. 116 gesteuert wird.

Anstatt nun eine Datenübertragung von Vorrichtung 100 zur Vorrichtung 102 mit einer fest eingestellten Sendeleistung durchzuführen, erfolgt zunächst unter Kontrolle der CPU 104 ein optisches Senden von ersten Datensignalen von dem Transceiver 108 an den Transceiver 118. Diese ersten Datensignale werden durch den optischen Transceiver 118 empfangen und analysiert. Die Analyse erfolgt in Bezug auf die Qualität der empfangenen ersten Datensignale.

Im Folgenden sei ohne Beschränkung der Allgemeinheit davon ausgegangen, dass die Empfangs-Qualitätsinformation, welche aus der Analyse resultiert, eine Empfangsleistung umfasst, mit welcher die ersten Datensignale durch den optischen Transceiver 118 empfangen werden. Wie jedoch oben erwähnt, kann die Empfangs-Qualitätsinformation auch andere Informationen umfassen, wie beispielsweise ein Signal-Rausch-Verhältnis oder eine Fehlerrate oder ein Signalverlauf, mit welchem die Datensignale durch den optischen Transceiver 118 empfangen werden. Unter dem Signalverlauf wird z.B. die geometrische Signalform verstanden.

Im Falle dessen der optische Transceiver bereits ein entsprechendes Diagnoseinterface aufweist, kann die entsprechende Empfangsleistung direkt vom Diagnoseinterface an die CPU 114 der Vorrichtung 102 kommuniziert werden. Die CPU 114 ist darauf in der Lage, zweite Datensignale zu erzeugen, welche die Empfangs-Qualitätsinformation in Form der Empfangsleistung umfassen. Diese zweiten Datensignale werden daraufhin unter Steuerung der CPU 114 und unter Verwendung des optischen Transceivers 118 über den Leitungsweg 120 an den optischen Transceiver 108 zurückübertragen. Der optische Transceiver 108 empfängt diese zweiten Datensignale, welche daraufhin von der CPU 104 ausgewertet werden. Die CPU 104 kann daraufhin die Sendeleistung des optischen Transceivers 108 in Abhängigkeit von dieser Empfangsleistung regeln, wobei die Regelung so durchgeführt wird, dass weitere an den Transceiver 118 zu sendende Datensignale mit zumindest einer vorbestimmten Qualität durch den Transceiver 118 empfangen werden können. Bei diesen weiteren Datensignalen kann es sich dann schließlich um Nutzdaten oder auch für einen erneuten Kalibrierungsvorgang um weitere erste Datensignale handeln.

Des Weiteren ist es möglich, dass der optische Transceiver 108 die empfangenen zweiten Datensignale ebenfalls bezüglich einer Empfangsqualität analysiert und wiederum zum Beispiel über sein Diagnoseinterface die Empfangsleistung an die CPU 104 übermittelt. Die CPU 104 codiert diese Empfangsleistung wiederum in Form entsprechender zweiter Datensignale, woraufhin diese so erzeugten zweiten Datensignale unter Verwendung des optischen Transceivers 108 an den Transceiver 118 übertragen werden können. Dies ermöglicht seinerseits wiederum der Vorrichtung 102, deren Sendeleistung in Abhängigkeit von der so empfangenen Empfangs-Qualitätsinformation optimiert anzupassen.

Zusammengefasst erfolgt also eine optimierte optische Übertragung von Nutzdaten mit einer Sendeleistung, welche auf einen solchen Pegel eingeregelt ist, welcher eine fehlerfreie Übertragung im Sinne von zugrunde liegenden IEEE-Normen ermöglicht. Die optische Strecke 120 ergibt sich dabei durch die Leistung, die der Sender in das Kabel einspeist, die optischen Verluste entlang des Kabels und der empfangenen Leistung im Empfänger. Da die eingespeiste Leistung und die ankommende Leistung dem Empfänger der Sendestation bekannt ist, kann die Sendestation auf den Pegel eingeregelt werden, der für die fehlerfreie Übertragung der Daten optimiert ist. Wie bereits oben erwähnt, erfolgt dabei vorzugsweise die Einstellung der Sendeleistung mit einer gewissen Reserve, die beispielsweise mögliche Temperaturveränderungen auf der Sendeseite berücksichtigt.

Die Kommunikation der Empfangs-Qualitätsinformation erfolgt vorzugsweise über ein sogenanntes "Nachbarschaftsprotokoll".

Die obig beschriebene Ausführungsform bezüglich der Vorrichtungen 100 und 102 ging davon aus, dass eine Analyse der Empfangs-Qualitätsinformation unter Verwendung der jeweiligen CPUs 104 und 114 der zugehörigen Vorrichtungen 100 bzw. 102 durchgeführt wird. Allerdings ist es alternativ oder zusätzlich auch möglich, dass die Empfangs-Qualitätsinformationen durch die jeweiligen Transceiver selbst analysiert werden, d.h. dass obig beschriebene Aufgaben, welche durch die CPUs durchgeführt wurden, durch die optischen Transceiver selbst durchgeführt werden. Damit erfolgt die Regelung der Sendeleistung in Abhängigkeit von der Empfangs-Qualitätsinformation durch die optischen Transceiver 108 bzw. 118 selbst - eine zusätzliche CPU 104 bzw. 114 ist dazu nicht notwendig.

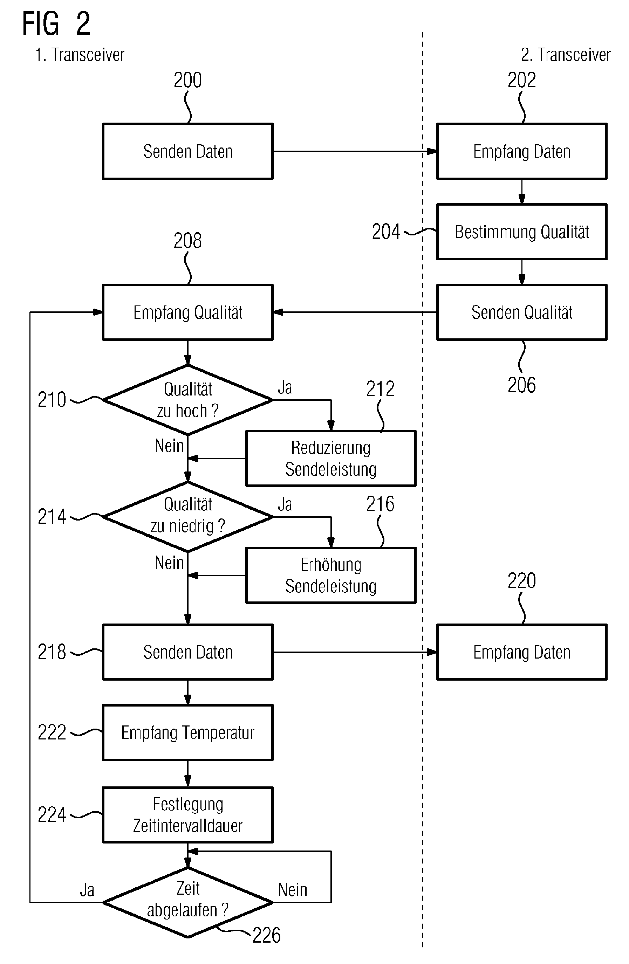

Die Figur 2 zeigt ein Flussdiagramm eines Verfahrens zur optischen Übertragung von Nutzdaten von einem ersten Transceiver (linke Seite des Flussdiagramms) an einen zweiten Transceiver (rechte Seite des Flussdiagramms). Das Verfahren beginnt zunächst in Schritt 200 mit dem optischen Senden von ersten Datensignalen an den zweiten Transceiver, welche in Schritt 202 von dem zweiten Transceiver optisch empfangen werden. In Schritt 204 erfolgt eine Bestimmung der Empfangs-Qualitätsinformationen am zweiten Transceiver, woraufhin in Schritt 206 die so bestimmte Empfangs-Qualitätsinformation in Form zweiter Datensignale an den ersten Transceiver übertragen werden.

In Schritt 208 wird die Empfangs-Qualitätsinformation in Form der zweiten Datensignale durch den ersten Transceiver empfangen. In Schritt 210 wird zunächst bestimmt, ob die Empfangsqualität, beispielsweise die Empfangsleistung, am zweiten Transceiver zu hoch ist oder nicht. Ist dies der Fall, so ist dies ein Indiz dafür, dass die aktuell am ersten Transceiver verwendete Sendeleistung zu hoch ist. Eine Reduzierung der Sendeleistung ermöglicht somit schlussendlich eine Reduzierung entsprechender Anforderungen an die Leistung von Netzteilen, welche zum Betrieb des ersten Transceivers notwendig sind. Eine entsprechende damit einhergehende geringere Wärmeentwicklung führt außerdem zu einer längeren Lebensdauer der am ersten Transceiver verbauten elektronischen Komponenten.

Wird also in Schritt 210 festgestellt, dass die Empfangsqualität am zweiten Transceiver oberhalb eines vorbestimmten Schwellwertes liegt, so wird in Schritt 212 die vom ersten Transceiver verwendete Sendeleistung reduziert. Die Reduzierung der Sendeleistung erfolgt dabei so weit, dass Daten am zweiten Transceiver mit zumindest einer vorbestimmten Mindestqualität empfangen werden können. Daraufhin setzt sich das Verfahren im Schritt 214 fort.

Ergibt sich in Schritt 210, dass die Qualität der am zweiten Transceiver empfangenen Daten nicht so hoch ist, setzt sich das Verfahren unmittelbar in Schritt 214 fort. In Schritt 214 wird überprüft, ob beispielsweise die Qualität der am zweiten Transceiver empfangenen Datensignale zu gering ist. Dies könnte verschiedene Ursachen haben. Beispielsweise ist es denkbar, dass das in Figur 2 beschriebene Verfahren bereits mehrmals durchgeführt wurde, wobei im Rahmen der Durchführung eine Reduzierung der Sendeleistung erfolgte. Aufgrund beispielsweise einer stark veränderten Temperatur am ersten Transceiver könnte dieser augenblicklich jedoch mit einer durch die Temperatur resultierenden verringerten Sendeleistung Daten an den zweiten Transceiver übertragen. Dies führt dazu, dass am zweiten Transceiver diese Daten mit einer zu geringen Empfangsqualität ankommen. Wird nun also in Schritt 214 ermittelt, dass die am zweiten Transceiver empfangenen Daten eine zu geringe Empfangsqualität aufweisen, wird daraufhin in Schritt 216 und entsprechender Weise wiederum die Sendeleistung erhöht, sodass die Datensignale wieder mit einer vorbestimmten Qualität am zweiten Transceiver empfangen werden können.

Entweder direkt nach Schritt 214 oder nach Schritt 216 erfolgt dann schließlich in Schritt 218 das Senden der eigentlichen Nutzdaten vom ersten Transceiver an den zweiten Transceiver, wobei die Daten in Schritt 220 vom zweiten Transceiver empfangen werden.

Nach Durchführung von Schritt 218 auf der Seite des ersten Transceivers ist es nun möglich, direkt zu Schritt 208 zurückzugehen, und sofort weitere Empfangs-Qualitätsinformationen vom zweiten Transceiver zu empfangen. Daraufhin würden dann die Schritte 210 - 218 wie oben beschrieben durchgeführt. Möglich ist es auch, nach Schritt 218 einen Timer zu starten, nach dessen Ablauf erst Schritt 208 erneut durchgeführt wird. In der Zwischenzeit erfolgt eine übliche Kommunikation von Nutzdaten zwischen dem ersten und zweiten Transceiver.

Die Schritte 222 und 226 sind optional. So ist es beispielsweise möglich, nach Schritt 218 in Schritt 222 die Temperatur des ersten optischen Transceivers zu empfangen und zu analysieren. Hierdurch ist es möglich den Prozess der Leistungsregelung adaptiv an die gegebenen Temperaturen anzupassen - im weiteren dargestellt durch die Anpassung der Regelintervalle. Die empfangene Temperatur kann nun dazu verwendet werden, in Schritt 224 eine Zeitintervalldauer festzulegen, nach deren Ablauf in Schritt 226 der obig beschriebene Regelungsvorgang der Sendeleistung am ersten Transceiver erneut durchgeführt wird. In der Zeit des Ablaufs der Zeitintervalldauer erfolgt weiter die übliche Kommunikation von Nutzdaten zwischen dem ersten und zweiten Transceiver.

Die Verwendung eines Timers hat folgenden Hintergrund: Befindet sich der erste Transceiver in einem Temperaturbereich, in welchem bei kleineren Temperaturschwankungen große Schwankungen der Sendeleistung zu erwarten sind, sollte vorzugsweise das Zeitintervall so kurz gesetzt sein, dass auf kurzfristige Temperaturschwankungen vom ersten Transceiver zeitnah reagiert werden kann. Befindet sich der erste Transceiver hingegen in einem Temperaturbereich, in welchem auch bei größeren Temperaturschwankungen nicht mit signifikanten Schwankungen der Sendeleistung gerechnet werden muss, so ist es ausreichend, eine höhere Zeitintervalldauer zu wählen.

Alternativ oder zusätzlich ist es auch möglich, die Zeitintervalldauer fest vorzugeben, beispielsweise im Sekundentakt, sodass das in Figur 2 beschriebene Verfahren kontinuierlich zyklisch regelmäßig durchgeführt wird.

Abschließend sei angemerkt, dass die in Schritt 222 empfangene Temperatur in die Berechnungen für die Schritte 212 bzw. 216 einfließen kann, um die Sendeleistung so zu verändern, dass die Sendeleistung so eingestellt wird, dass eine gewisse Reserve vorliegt, die mögliche Temperaturveränderungen auf der Seite des ersten Transceivers berücksichtigt.

### Bezugszeichenliste

- 100: Vorrichtung
- 102: Vorrichtung
- 104: CPU
- 106: Switch
- 108: Transceiver
- 110: Speicher
- 112: Speicher
- 114: CPU
- 116: Switch
- 118: optischer Transceiver
- 120: optischer Übertragungsweg

## Patentansprüche

1. Verfahren zur optischen Übertragung von Nutzdaten durch einen Transceiver (100) an einen Empfänger (102), wobei das Verfahren die Schritte umfasst:
- Optisches Senden (200) von ersten Datensignalen an den Empfänger (102) mit einer Sendeleistung,
- Empfang (208) von zweiten Datensignalen von dem Empfänger (102) als Antwort auf die ersten Datensignale, wobei die zweiten Datensignale eine Empfangsqualitätsinformation umfassen, wobei die Empfangsqualitätsinformation ein Maß für die Qualität umfasst, mit welcher die ersten Datensignale durch den Empfänger (102) empfangen werden,
- Regelung (212; 216) der Sendeleistung in Abhängigkeit von der Empfangsqualitätsinformation, wobei die Regelung so durchgeführt wird, dass die ersten Datensignale mit zumindest einer vorbestimmten Qualität durch den Empfänger (102) empfangen werden können,
- Übertragung (218) der Nutzdaten mit der geregelten Sendeleistung an den Empfänger (102).

2. Verfahren nach Anspruch 1, wobei die Empfangsqualitätsinformation eine Empfangsleistung umfassen, mit welcher die ersten Datensignale durch den Empfänger (102) empfangen werden.

3. Verfahren nach Anspruch 1, wobei die Empfangsqualitätsinformation eine Signal-Rausch-Verhältnis umfassen, mit welchem die ersten Datensignale durch den Empfänger (102) empfangen werden.

4. Verfahren nach Anspruch 1, wobei die ersten Datensignale über einen optischen Übertragungsweg (120) an den Empfänger (102) gesendet werden, wobei die zweiten Datensignale über denselben optischen Übertragungsweg (120) empfangen werden.

5. Verfahren nach Anspruch 1, wobei die Nutzdaten einen ersten und einen zweiten Teil umfassen, wobei es sich bei den ersten Datensignalen um den ersten Teil der Nutzdaten selbst handelt, wobei es sich bei den mit der geregelten Sendeleistung an den Empfänger (102) übertragenen Nutzdaten um den zweiten Teil der Nutzdaten handelt.

6. Verfahren nach Anspruch 1, wobei die Regelung der Sendeleistung zusätzlich in Abhängigkeit von der Temperatur des Transceivers (108) und/oder der Spannung des Transceivers (108) erfolgt.

7. Verfahren nach Anspruch 6, wobei ferner eine die Regelung so durchgeführt wird, dass bei einer Abweichung von dieser Temperatur und/oder dieser Spannung um einen maximalen vorbestimmten Wert die ersten Datensignale mit zumindest der vorbestimmten Qualität durch den Empfänger (102) empfangen werden können.

8. Verfahren nach Anspruch 6, wobei
- es sich bei der Temperatur um eine aktuell gemessene Betriebstemperatur des Transceivers (108) oder eine über einen Zeitraum gemittelte Betriebstemperatur des Transceivers (108) handelt, und/oder
- es sich bei der Spannung um eine aktuell gemessene Betriebsspannung des Transceivers (108) oder eine über einen Zeitraum gemittelte Betriebsspannung des Transceivers (108) handelt.

9. Vorrichtung (100) zur optischen Übertragung von Nutzdaten an einen Empfänger (118), wobei die Vorrichtung umfasst:
- Einen Transceiver (108) zum optisches Senden von ersten Datensignalen an den Empfänger (102) mit einer Sendeleistung, wobei der Transceiver (108) ferner ausgebildet ist zum Empfang von zweiten Datensignalen von dem Empfänger (102) als Antwort auf die ersten Datensignale, wobei die zweiten Datensignale eine Empfangsqualitätsinformation umfassen, wobei die Empfangsqualitätsinformation ein Maß für die Qualität umfasst, mit welcher die ersten Datensignale durch den Empfänger (102) empfangen werden,
- Mittel (104; 110) zur Regelung der Sendeleistung in Abhängigkeit von der Empfangsqualitätsinformation, wobei die Vorrichtung (100) ausgebildet ist, die Regelung so durchzuführen, dass die ersten Datensignale mit zumindest einer vorbestimmten Qualität durch den Empfänger (102) empfangen werden können, wobei der Transceiver dazu ausgebildet ist, die Nutzdaten mit der geregelten Sendeleistung an den Empfänger (102) zu übertragen.

10. Vorrichtung nach Anspruch 9, wobei die Vorrichtung zur Durchführung eines Verfahrens gemäß einem der Ansprüche 1 bis 8 ausgebildet und eingerichtet ist.

11. Computerprogrammprodukt mit von einem Prozessor ausführbaren Instruktionen zur Durchführung der Verfahrensschritte gemäß einem der vorigen Ansprüche 1 bis 8.
